# EUROPÄISCHE PATENTSCHRIFT

(11) **EP 3 948 178 B1**
(45) Veröffentlichungstag und Bekanntmachung des Hinweises auf die Patenterteilung: **05.04.2023**
(21) Anmeldenummer: 20705197.0
(22) Anmeldetag: 14.02.2020
(51) Int. Cl.: G01F 1/84

(54) **CORIOLIS-MESSAUFNEHMER UND CORIOLIS-MESSGERÄT**
CORIOLIS SENSOR AND CORIOLIS MEASURING DEVICE
CAPTEUR DE MESURE À EFFET CORIOLIS ET APPAREIL DE MESURE À EFFET CORIOLIS

(30) Priorität: 25.03.2019 DE 102019107601
(43) Veröffentlichungstag der Anmeldung: 09.02.2022
(73) Patentinhaber: Endress + Hauser Flowtec AG, 4153 Reinach (CH)
(72) Erfinder: SCHWENTER, Benjamin, 4147 Aesch (CH); WERNER, Marc, 79639 Grenzach-Wyhlen (DE); HOLLINGER, Claude, 4147 Aesch (CH); GSCHWEND, Gebhard, 4123 Allschwil (CH)
(74) Vertreter: Waselikowski, Stefan
(86) Internationale Anmeldenummer: PCT/EP2020/053907
(87) Internationale Veröffentlichungsnummer: WO 2020/193006

(56) Entgegenhaltungen:
- EP-A1- 1 719 983
- WO-A1-2005/073676
- DE-A1-102015 120 087
- US-A- 5 349 872

## Beschreibung

Die Erfindung betrifft einen Coriolis-Messaufnehmer eines Coriolis-Messgeräts zum Erfassen eines Massedurchflusses oder einer Dichte eines durch mindestens ein Messrohr strömenden Mediums sowie ein Coriolis-Messgerät mit einem solchen Coriolis-Messaufnehmer.

Coriolis-Messgeräte zum Messen eines Massedurchflusses oder einer Dichte eines durch ein Messrohr des Messgeräts strömenden Mediums sind Stand der Technik. Wie in der DE102015120087A1 beispielhaft gezeigt, kann ein Sensor zum Erfassen von Messrohrschwingungen bzw. ein Erreger zum Erzeugen von Messrohrschwingungen eine Planarspule und ein U-förmiges, magnetfelderzeugendes Element umfassen, welches die Planarspule umgreift. Ein ähnliches Coriolis-Messgerät ist auch in WO 2005/073676 A1 offenbart.

Nachteilhaft an einem solchen magnetfelderzeugenden Element ist das Vorliegen eines Magnetfelds, welches einen unscharfen Übergang zu einem Raumbereich ohne Magnetfeld aufweist. Dies hat bei Sensoren eine geringere Empfindlichkeit zur Folge.

Alternativ können auch Magnete mit räumlich definiertem Magnetfeld verwendet werden, jedoch stellt eine einfache, robuste und genaue Lagerung der Magnete eine Herausforderung dar.

Aufgabe der Erfindung ist es daher, einen Coriolis-Messaufnehmer sowie ein Coriolis-Messgerät vorzuschlagen, bei welchen eine solche Lagerung von Magneten bewerkstelligt ist.

Die Aufgabe wird gelöst durch einen Coriolis-Messaufnehmer gemäß dem unabhängigen Anspruch 1 sowie durch ein Coriolis-Messgerät gemäß dem unabhängigen Anspruch 15.

Ein erfindungsgemäßer Coriolis-Messaufnehmer eines Coriolis-Messgeräts zum Erfassen eines Massedurchflusses oder einer Dichte eines durch mindestens ein Messrohr strömenden Mediums umfasst:
das mindestens eine Messrohr mit einem Einlauf und einem Auslauf, welches dazu eingerichtet ist, das Medium zwischen Einlauf und Auslauf zu führen;
einen Trägerkörper, welcher dazu eingerichtet ist, das mindestens eine Messrohr zu halten,
mindestens einen Erreger, welcher dazu eingerichtet ist, das mindestens eine Messrohr zu Schwingungen anzuregen;
mindestens zwei Sensoren, welche dazu eingerichtet sind, jeweils Schwingungen mindestens eines Messrohrs zu erfassen;
wobei mindestens ein Erreger und/oder mindestens ein Sensor jeweils eine Spulenvorrichtung mit jeweils mindestens einer Spule, sowie jeweils eine Magnetvorrichtung aufweisen, wobei die Magnetvorrichtung und die Spulenvorrichtung relativ zueinander bewegbar sind,
wobei die Magnetvorrichtung eine Halterung und zumindest eine erste Magnetgruppe mit mindestens einem Magnet und zumindest eine zweite Magnetgruppe mit mindestens einem Magnet aufweist,
wobei die Halterung einen Körper mit einer Körperlängsachse und einem ersten Ende und mit einem zweiten Ende aufweist, wobei das erste Ende eine Stirnfläche aufweist,
wobei der Körper drei Einschnitte aufweist, welche planparallel zueinander und senkrecht zur Stirnfläche verlaufen, wobei ein zentraler Einschnitt durch jeweils eine Zwischenwandung von jeweils einem äußeren Einschnitt getrennt ist,
wobei jede Zwischenwandung eine Öffnung aufweist, wobei die Öffnungen bezüglich des zentralen Einschnitts gegenüberliegend sind,
wobei die Spulenvorrichtung zumindest abschnittsweise im zentralen Einschnitt angeordnet ist, und wobei die erste Magnetgruppe in einer ersten Öffnung angeordnet ist, und wobei die zweite Magnetgruppe in einer zweiten Öffnung angeordnet ist.

Eine Halterung wie hier vorgeschlagen lässt sich besonders einfach und kostengünstig mittels Fräsen herstellen und erlaubt eine präzise und robuste Positionierung der Magnetgruppen in den jeweiligen Öffnungen.

In einer Ausgestaltung gehen die Öffnungen von der Stirnfläche aus.

In einer Ausgestaltung sind die Magnetgruppen jeweils mittels eines Klebers in der jeweiligen Öffnung gehalten, wobei der Kleber insbesondere ein Keramikkleber ist.

In einer Ausgestaltung weist jede Magnetgruppe zwei Magnete und mindestens eine magnetisch leitfähige, insbesondere ferromagnetische Schlussvorrichtung auf,
wobei die Magnetfelder der beiden Magnete entgegengesetzt orientiert sind, und wobei die Schlussvorrichtung dazu eingerichtet ist, Feldlinien der Magnetfelder beider Magnete zu leiten und zusammenzuführen,
wobei die Magnete mit der Schlussvorrichtung mechanisch kontaktiert sind,
wobei Magnetfelder sich gegenüberliegenden Magnete verschiedener Magnetgruppen gleichgerichtet sind,
und wobei die Schlussvorrichtung auf einer der jeweils anderen Magnetgruppe abgewandten Seite der Magnetgruppe angeordnet ist.

In einer Ausgestaltung weist die mindestens eine Spule einen Zentralbereich und einen den Zentralbereich umfassenden Windungsbereich auf,
wobei in einem Ruhezustand des mindestens einen Messrohrs eine Grenze zwischen den Magneten einer Magnetgruppe projiziert auf die Querschnittsebene zumindest abschnittsweise im Zentralbereich befindlich ist,
und wobei die Magnete einer Magnetgruppe in Schwingungsrichtung hintereinander angeordnet sind.

In einer Ausgestaltung ist die Halterung aus einem nichtmagnetischen Material wie beispielsweise einem Edelstahl wie beispielsweise 316L oder SS420 oder Aluminium, Kupfer, Titan oder einem Kunststoff gefertigt und weist insbesondere eine Massendichte geringer als 8g/cm^3 auf.

In einer Ausgestaltung ist die Halterung an einem Messrohr oder an einer Fixierung befestigbar.

In einer Ausgestaltung sind die äußeren Einschnitte jeweils durch eine Außenwandung begrenzt,
wobei die Magnetgruppen jeweils an einer zugehörigen Außenwandung beanschlagt sind.

In einer Ausgestaltung ist die Spule eines Erregers dazu eingerichtet, die zugehörige Magnetvorrichtung mit einer Kraft zu beaufschlagen, und wobei die Magnetvorrichtung eines Sensors dazu eingerichtet ist, in der Spule der zugehörigen Spulenvorrichtung eine elektrische Spannung zu induzieren.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer zwei Prozessanschlüsse, insbesondere Flansche auf, welche dazu eingerichtet sind, den Messaufnehmer mit einer Rohrleitung zu verbinden.

In einer Ausgestaltung ist die Magnetvorrichtung mechanisch mit dem zugehörigen Messrohr verbunden ist, und wobei die Spulenvorrichtung bzgl. des Einlaufs bzw. Auslaufs translatorisch sowie rotatorisch fixiert ist.

In einer Ausgestaltung weist der Messaufnehmer ein Messrohr auf,
wobei die Halterung / die Spulenvorrichtung des Sensors bzw. Erregers jeweils am Messrohr befestigt ist,
und wobei die Spulenvorrichtung / die Halterung des Sensors bzw. Erregers jeweils am Trägerkörper befestigt sind,
oder wobei der Messaufnehmer ein Messrohrpaar aufweist, wobei die Halterung / die Spulenvorrichtung des Sensors bzw. Erregers jeweils an einem ersten Messrohr befestigt sind, und die Spulenvorrichtung / die Halterung jeweils an einem zweiten Messrohr befestigt sind.

In einer Ausgestaltung weist der Messaufnehmer zwei Messrohrpaare aufweist.

Ein erfindungsgemäßes Coriolis-Messgerät umfasst:
Einen Coriolis-Messaufnehmer nach einem der vorigen Ansprüche;
eine elektronische Mess-/Betriebsschaltung, wobei die elektronische Mess-/Betriebsschaltung dazu eingerichtet ist, den Erreger sowie die Sensoren zu betreiben,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.
Fig. 1 zeigt ein Coriolis-Messgerät 1 mit einem beispielhaften erfindungsgemäßen Coriolis-Messaufnehmer.
Figs. 2 a) bis c) skizzieren eine beispielhafte erfindungsgemäße Halterung einer Magnetvorrichtung.
Fig. 3 skizziert eine Seitenansicht einer Magnetvorrichtung mit einer beispielhaften erfindungsgemäßen Halterung
Fig. 4 skizziert schematisch eine Anordnung einer Magnetgruppe bzgl. einer Spule im Ruhezustand eines Messrohrs.
Fig. 5 zeigt eine beispielhafte räumliche Darstellung der in Figs. 2 a) bis c) skizzierten Halterung.

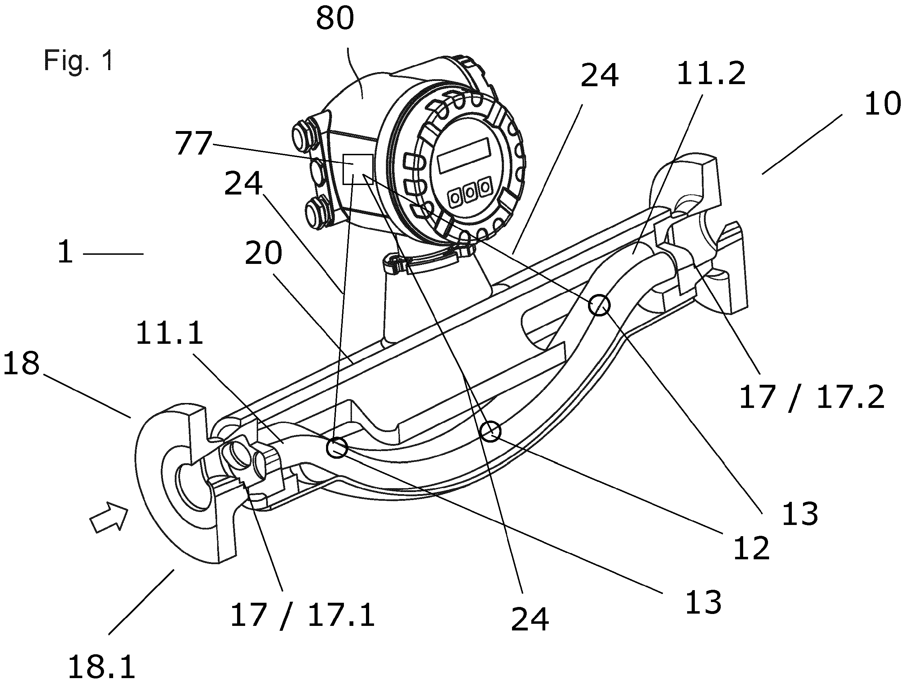

Fig. 1 zeigt ein beispielhaftes erfindungsgemäßes Coriolis-Messgerät 1 mit einem bespielhaften erfindungsgemäßen Coriolis-Messaufnehmer 10. Der Messaufnehmer umfasst einen Trägerkörper 20 und zwei Messrohren, welche jeweils einen Einlauf 11.1 und einen Auslauf 11.2 aufweisen. Der Messaufnehmer umfasst des Weiteren einen Erreger 12 zum Erregen von Messrohrschwingungen und zwei Sensoren 13 zum Erfassen von Messrohrschwingungen. Das Coriolis-Messgerät umfasst ein Elektronikgehäuse 80, in welchem eine elektronische Mess-/Betriebsschaltung 77 angeordnet ist, welche dazu eingerichtet ist, den Erreger sowie die Sensoren zu betreiben und Messwerte bezüglich eines durch die Messrohre strömenden Mediums bereitzustellen. Der Erreger sowie die Sensoren sind mittels elektrischer Verbindungen 24 mit der elektronischen Mess-/Betriebsschaltung 77 verbunden.

Der Messaufnehmer kann wie hier dargestellt zwei Sammler 17 aufweisen, wobei ein erster Sammler 17.1 auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen, wobei ein zweiter Sammler 17.2 dazu eingerichtet ist, das aus dem Auslauf des mindestens einen Messrohrs austretende Medium aufzunehmen und in die Rohrleitung zu führen.

Messaufnehmer weisen üblicherweise wie hier gezeigt zwei Prozessanschlüsse 18, insbesondere Flansche 18.1 auf, welche dazu eingerichtet sind, den Messaufnehmer mit einer Rohrleitung zu verbinden.

Die hier gezeigte Ausgestaltung ist beispielhaft, so kann der Messaufnehmer beispielsweise auch nur ein Messrohr oder mehr als zwei Messrohre aufweisen.

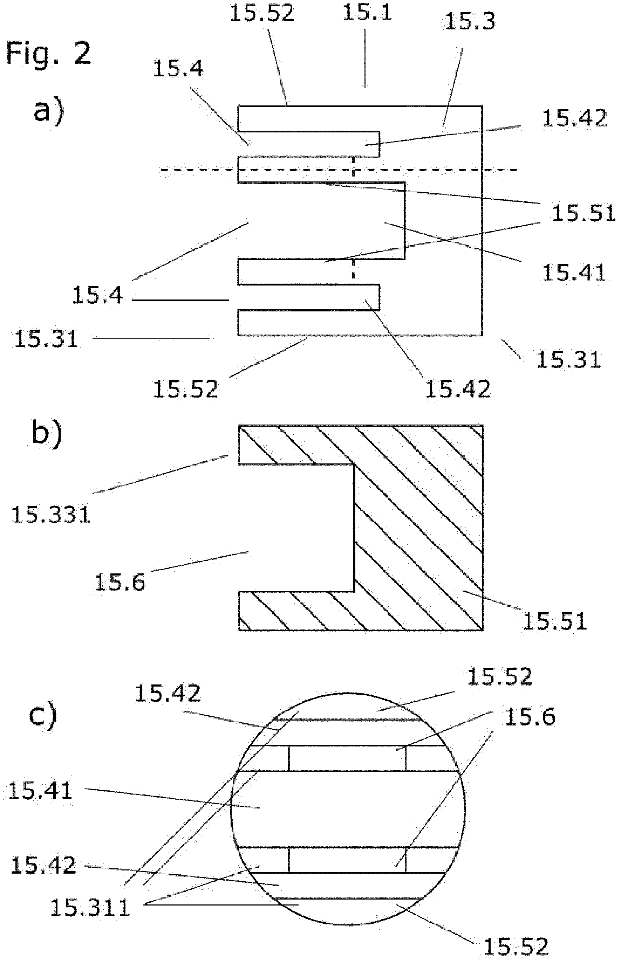

Fig. 2 a) zeigt eine Seitenansicht einer beispielhaften erfindungsgemäßen Halterung 15.1 einer Magnetvorrichtung 15, wobei die Halterung einen Körper 15.3 mit drei Einschnitten 15.4 umfasst, welche planparallel zueinander und senkrecht zu einer Stirnfläche 15.311 verlaufen, wobei ein zentraler Einschnitt 15.41 durch jeweils eine Zwischenwandung 15.51 von jeweils einem äußeren Einschnitt 15.42 getrennt ist.

Die Stirnfläche ist an einem ersten Ende 15.31 des Körpers angeordnet. Der Körper kann mittels eines dem ersten Ende gegenüberliegenden zweiten Ende 15.32 an einem Messrohr oder an einer Fixierung befestigt werden. Beispielsweise eignet sich dafür eine Kleb-, Schweiß- oder Schraubverbindung (nicht dargestellt).

Fig. 2 b) skizziert einen Längsschnitt durch eine Zwischenwandung 15.51 des Körpers. Die Zwischenwandungen 15.51 weisen jeweils eine Öffnung 15.6 auf, welche insbesondere wie hier dargestellt von der Stirnfläche 15.311 ausgehen.

Fig. 2 c) zeigt eine Aufsicht auf die Stirnfläche 15.311 des Körpers, von welcher Aufsicht die Öffnungen 15.6 der Zwischenwände sichtbar sind. Hierbei wird ersichtlich, dass die Einschnitte sowie die Öffnungen besonders einfach und präzise durch Fräsen in den Körper eingeschnitten werden können. Somit können Rundungen an Kanten, welche bei Fräsen aufgrund eines endlichen Fräskopfdurchmessers auftreten können vermieden und präzise definierte Kanten gefertigt werden.

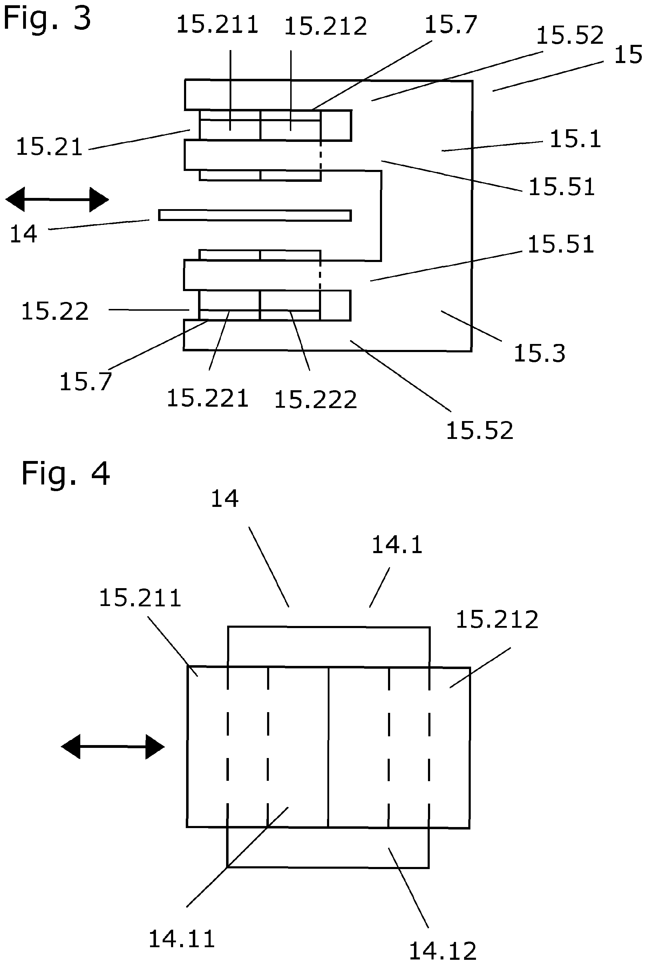

Fig. 3 zeigt eine Seitenansicht auf eine Magnetvorrichtung umfassend die in Figs. 2 a) bis c) gezeigte Halterung 15.1, in welche eine erste Magnetgruppe 15.21 und eine zweite Magnetgruppe 15.22 eingesetzt ist. Beide Magnetgruppen weisen jeweils einen ersten Magnet 15.211 / 15.221 und einen zweiten Magnet 15.212 / 15.222 auf, wobei die Magnetfelder der beiden Magnete einer jeweiligen Magnetgruppe entgegengesetzt orientiert sind. Sich gegenüberliegende Magnete verschiedener Magnetgruppen weisen gleiche Magnetfeldorientierung auf. Auf diese Weise entsteht zwischen den ersten Magneten und den zweiten Magneten eine scharfe Magnetfeldkante. Auf der der Außenwandung 15.52 zugewandten Rückseite der Magnete einer Magnetgruppe ist eine magnetische Schlussvorrichtung 15.7, insbesondere eine ferromagnetische Schlussvorrichtung angeordnet, welche dazu eingerichtet ist, die Feldlinien der zur jeweiligen Magnetgruppe gehörenden Magnete zu schließen und somit für einen höheren magnetischen Fluss zu sorgen.

Die Magnetgruppe ist dabei in der Öffnung der zugehörigen Zwischenwandung 15.51 angeordnet. Bevorzugt sind geometrische Abmessungen der Magnetgruppe sowie der Öffnung aufeinander abgestimmt, so dass die Magnetgruppe ohne wesentliches Spiel nach drei Seiten durch eine Umrandung der Öffnung fixiert ist. Die Magnetgruppe beaufschlagt dabei auch die zugehörige Außenwandung 15.52. Auf diese Weise lässt sich die Magnetgruppe sicher und präzise positionieren. Die Magnetgruppen sind dabei jeweils mittels eines Klebers in der jeweiligen Öffnung gehalten, wobei der Kleber insbesondere ein Keramikkleber ist.

Der Körper ist bevorzugt aus einem nicht oder wenig magnetischen und insbesondere 3D-druckbaren Material hergestellt, wie beispielsweise einem Edelstahl, Aluminium, Keramik, Kunststoff.

Angedeutet ist die Positionierung einer Spulenvorrichtung 14 sowie eine Richtung einer durch eine Messrohrschwingung verursachten Relativbewegung. Weiteres dazu findet sich in der Beschreibung zu Fig. 4.

Anders als hier gezeigt kann eine Magnetvorrichtung auch Magnetgruppen mit jeweils nur einem Magnet aufweisen.

Fig. 4 skizziert eine relative Positionierung einer ersten Magnetgruppe mit zwei Magneten 15.21 / 15.22 bezüglich einer Spulenvorrichtung 14 mit einer Spule 14.1. Die Spule weist einen Zentralbereich 14.11 und einen den Zentralbereich umgebenden Windungsbereich auf. In einem Ruhezustand des mindestens einen Messrohrs befindet sich eine Grenze zwischen den Magneten einer Magnetgruppe projiziert auf die Querschnittsebene bevorzugt zumindest näherungsweise in einer Mitte des Zentralbereichs.

Bevorzugt weist der Zentralbereich der Spule in Richtung der durch Messrohrschwingungen verursachten Relativbewegungen eine Ausdehnung auf, welche größer ist als für das Messrohr typische Schwingungsamplituden, und welche kleiner ist als ein Zweifaches einer typischen Schwingungsamplitude.

Die Grenze zwischen den Magneten verläuft dabei bevorzugt senkrecht zur Richtung der Relativbewegung. Relativbewegungen zwischen Spule und Magnetvorrichtung bewirken dadurch eine starke Induktion elektrischer Spannungen in der Spule.

Bei einem Einrohr-Coriolis-Messaufnehmer ist die Halterung 15.3 eines Sensors bzw. Erregers bevorzugt am Messrohr angeordnet, und die Spulenvorrichtung eines Sensors bzw. Erregers mittels einer Haltevorrichtung am Trägerkörper 20.

Bei einem Zweirohr-Coriolis-Messaufnehmer ist bevorzugt die Halterung eines Sensors bzw. Erregers an einem ersten Messrohr und die Spulenvorrichtung eines Sensors bzw. Erregers an einem zweiten Messrohr befestigt.

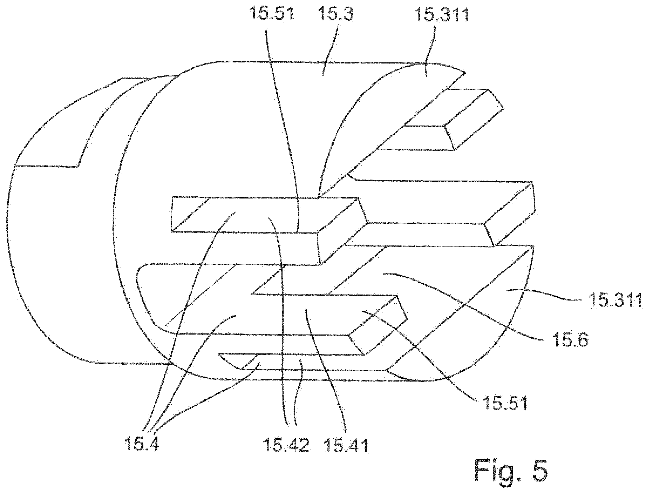

Fig. 5 zeigt eine räumliche Darstellung des in Figs. 2 a) bis 2 c) skizzierten Körpers 15.3 mit einer Stirnfläche 15.311 und Einschnitten 15.4, welche durch die Zwischenwandungen 15.51 voneinander getrennt sind. Die Zwischenwandungen weisen Öffnungen 15.6 auf, in welchen Magnetgruppen wie beschrieben positionierbar sind.

### Bezugszeichenliste

- 1: Coriolis-Messgerät
- 10: Coriolis-Messaufnehmer
- 11: Messrohr
- 11.1: Einlauf
- 11.2: Auslauf
- 12: Erreger
- 13: Sensoren
- 14: Spulenvorrichtung
- 14.1: Spule
- 14.11: Zentralbereich
- 14.12: Windungsbereich
- 15: Magnetvorrichtung
- 15.1: Halterung
- 15.21: erste Magnetgruppe
- 15.211 / 15.212: Magnet
- 15.22: zweite Magnetgruppe
- 15.221 / 15.222: Magnet
- 15.3: Körper
- 15.31: erstes Ende
- 15.311: Stirnfläche
- 15.32: zweites Ende
- 15.4: Einschnitte
- 15.41: zentraler Einschnitt
- 15.42: äußerer Einschnitt
- 15.51: Zwischenwandung
- 15.52: Außenwandung
- 15.6: Öffnung
- 15.7: magnetische Schlussvorrichtung
- 17: Sammler
- 17.1: erster Sammler
- 17.2: zweiter Sammler
- 18: Prozessanschluss
- 18.1: Flansch
- 20: Trägerkörper
- 77: elektronische Mess-/Betriebsschaltung
- 80: Elektronikgehäuse

## Patentansprüche

1. Coriolis-Messaufnehmer (10) eines Coriolis-Messgeräts (1) zum Erfassen eines Massedurchflusses oder einer Dichte eines durch mindestens ein Messrohr strömenden Mediums, umfassend:
das mindestens eine Messrohr (11) mit einem Einlauf (11.1) und einem Auslauf (11.2), welches dazu eingerichtet ist, das Medium zwischen Einlauf und Auslauf zu führen;
einen Trägerkörper (20), welcher dazu eingerichtet ist, das mindestens eine Messrohr zu halten,
mindestens einen Erreger (12), welcher dazu eingerichtet ist, das mindestens eine Messrohr zu Schwingungen anzuregen;
mindestens zwei Sensoren (13), welche dazu eingerichtet sind, jeweils Schwingungen mindestens eines Messrohrs zu erfassen;
wobei mindestens ein Erreger und/oder mindestens ein Sensor jeweils eine Spulenvorrichtung (14) mit jeweils mindestens einer Spule (14.1), sowie jeweils eine Magnetvorrichtung (15) aufweisen, wobei die Magnetvorrichtung und die Spulenvorrichtung relativ zueinander bewegbar sind,
wobei die Magnetvorrichtung eine Halterung (15.1) und zumindest eine erste Magnetgruppe (15.21) mit mindestens einem Magnet (15.211, 15.212) und zumindest eine zweite Magnetgruppe (15.22) mit mindestens einem Magnet (15.221, 15.222) aufweist,
wobei die Halterung einen Körper (15.3) mit einer Körperlängsachse und einem ersten Ende (15.31) und mit einem zweiten Ende (15.32) aufweist, wobei das erste Ende eine Stirnfläche (15.311) aufweist,
**dadurch gekennzeichnet, dass**
der Körper drei Einschnitte (15.4) aufweist, welche planparallel zueinander und senkrecht zur Stirnfläche verlaufen, wobei ein zentraler Einschnitt (15.41) durch jeweils eine Zwischenwandung (15.51) von jeweils einem äußeren Einschnitt (15.42) getrennt ist,
wobei jede Zwischenwandung eine Öffnung (15.6) aufweist, wobei die Öffnungen bezüglich des zentralen Einschnitts gegenüberliegend sind,
wobei die Spulenvorrichtung zumindest abschnittsweise im zentralen Einschnitt angeordnet ist, und wobei die erste Magnetgruppe in einer ersten Öffnung angeordnet ist, und wobei die zweite Magnetgruppe in einer zweiten Öffnung angeordnet ist.

2. Coriolis-Messaufnehmer nach Anspruch 1,
wobei die Öffnungen von der Stirnfläche (15.311) ausgehen.

3. Coriolis-Messaufnehmer nach Anspruch 1 oder 2,
wobei die Magnetgruppen jeweils mittels eines Klebers in der jeweiligen Öffnung gehalten sind, wobei der Kleber insbesondere ein Keramikkleber ist.

4. Coriolis-Messaufnehmer nach einem der vorigen Ansprüche,
wobei jede Magnetgruppe (15.21, 15.22) zwei Magnete (15.211, 15.212, 15.221, 15.222) und mindestens eine magnetisch leitfähige, insbesondere ferromagnetische Schlussvorrichtung (15.7) aufweist,
wobei die Magnetfelder der beiden Magnete entgegengesetzt orientiert sind, und wobei die Schlussvorrichtung dazu eingerichtet ist, Feldlinien der Magnetfelder beider Magnete zu leiten und zusammenzuführen,
wobei die Magnete mit der Schlussvorrichtung mechanisch kontaktiert sind,
wobei Magnetfelder sich gegenüberliegenden Magnete verschiedener Magnetgruppen gleichgerichtet sind,
und wobei die Schlussvorrichtung auf einer der jeweils anderen Magnetgruppe abgewandten Seite der Magnetgruppe angeordnet ist.

5. Coriolis-Messaufnehmer nach Anspruch 4,
wobei die mindestens eine Spule (14.1) einen Zentralbereich (14.11) und einen den Zentralbereich umfassenden Windungsbereich (14.12) aufweist,
wobei in einem Ruhezustand des mindestens einen Messrohrs eine Grenze zwischen den Magneten einer Magnetgruppe projiziert auf die Querschnittsebene zumindest abschnittsweise im Zentralbereich befindlich ist,
und wobei die Magnete einer Magnetgruppe in Schwingungsrichtung hintereinander angeordnet sind.

6. Coriolis-Messaufnehmer nach einem der vorigen Ansprüche,
wobei die Halterung aus einem nichtmagnetischen Material wie beispielsweise einem Edelstahl oder Aluminium oder einem Kunststoff gefertigt ist und insbesondere eine Massendichte geringer als 8g/cm^3 aufweist.

7. Coriolis-Messaufnehmer nach einem der vorigen Ansprüche,
wobei die Halterung an einem Messrohr oder an einer Fixierung befestigbar ist.

8. Coriolis-Messaufnehmer nach einem der vorigen Ansprüche,
wobei die äußeren Einschnitte jeweils durch eine Außenwandung (15.52) begrenzt sind,
wobei die Magnetgruppen jeweils an einer zugehörigen Außenwandung beanschlagt sind.

9. Coriolis-Messaufnehmer nach einem der vorigen Ansprüche,
wobei die Spule eines Erregers dazu eingerichtet ist, die zugehörige Magnetvorrichtung mit einer Kraft zu beaufschlagen, und wobei die Magnetvorrichtung eines Sensors dazu eingerichtet ist, in der Spule der zugehörigen Spulenvorrichtung eine elektrische Spannung zu induzieren.

10. Coriolis-Messaufnehmer nach einem der vorigen Ansprüche,
wobei der Messaufnehmer zwei Sammler (17) aufweist, wobei ein erster Sammler (17.1) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (17.2) dazu eingerichtet ist, das aus dem Auslauf des mindestens einen Messrohrs austretende Medium aufzunehmen und in die Rohrleitung zu führen.

11. Coriolis-Messaufnehmer nach einem der vorigen Ansprüche,
wobei der Messaufnehmer zwei Prozessanschlüsse (18), insbesondere Flansche (18.1) aufweist, welche dazu eingerichtet sind, den Messaufnehmer mit einer Rohrleitung zu verbinden.

12. Coriolis-Messaufnehmer nach einem der vorigen Ansprüche,
wobei die Magnetvorrichtung mechanisch mit dem zugehörigen Messrohr verbunden ist, und wobei die Spulenvorrichtung bzgl. des Einlaufs bzw. Auslaufs translatorisch sowie rotatorisch fixiert ist.

13. Coriolis-Messaufnehmer nach einem der vorigen Ansprüche,
wobei der Messaufnehmer ein Messrohr aufweist,
wobei die Halterung / die Spulenvorrichtung des Sensors bzw. Erregers jeweils am Messrohr befestigt ist,
und wobei die Spulenvorrichtung / die Halterung des Sensors bzw. Erregers jeweils am Trägerkörper befestigt sind,
oder wobei der Messaufnehmer ein Messrohrpaar aufweist, wobei die Halterung / die Spulenvorrichtung des Sensors bzw. Erregers jeweils an einem ersten Messrohr befestigt sind, und die Spulenvorrichtung / die Halterung jeweils an einem zweiten Messrohr befestigt sind.

14. Coriolis-Messaufnehmer nach Anspruch 13,
wobei der Messaufnehmer zwei Messrohrpaare aufweist.

15. Coriolis-Messgerät (1) umfassend:
Einen Coriolis-Messaufnehmer (10) nach einem der vorigen Ansprüche;
eine elektronische Mess-/Betriebsschaltung (77), wobei die elektronische Mess-/Betriebsschaltung dazu eingerichtet ist, den Erreger sowie die Sensoren zu betreiben,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse (80) zum Behausen der elektronischen Mess-/Betriebsschaltung aufweist.

## Claims

1. Coriolis sensor (10) of a Coriolis measuring device (1) designed to measure a mass flow or a density of a medium flowing through at least one measuring tube, said sensor comprising:
the at least one measuring tube (11) with an inlet (11.1) and an outlet (11.2), wherein said tube is designed to conduct the medium between the inlet and the outlet;
a support body (20), which is designed to hold the at least one measuring tube,
at least an exciter (12), which is designed to cause the at least one measuring tube to vibrate;
at least two sensing elements (13), which are designed to measure, respectively, vibrations of at least one measuring tube;
wherein at least an exciter and/or at least a sensing element each have a coil unit (14) in each case with at least a coil (14.1), and a magnet unit (15), wherein the magnet unit and the coil unit are mobile in relation to one another,
wherein the magnet unit has a holder (15.1) and at least a first magnet group (15.21) with at least a magnet (15.211, 15.212) and at least a second magnet group (15.22) with at least a magnet (15.221, 15.222),
wherein the holder has a body (15.3) with a body longitudinal axis and a first end (15.31) and with a second end (15.32), wherein the first end has a front face (15.311),
**characterized in that**
the body has three notches (15.4) which extend in a parallel plane in relation to one another and perpendicular to the front face, wherein a central notch (15.41) is separated from an outer notch (15.42) by an intermediate wall (15.51),
wherein each intermediate wall has an opening (15.6), wherein the openings are opposite the central notch,
wherein the coil unit is arranged in the central notch at least in sections, and wherein the first magnet group is arranged in a first opening, and wherein the second magnet group is arranged in a second opening.

2. Coriolis sensor as claimed in Claim 1,
wherein the openings extend from the front face (15.311).

3. Coriolis sensor as claimed in Claim 1 or 2,
wherein the magnet groups are each held in the respective opening by an adhesive, wherein the adhesive is particularly a ceramic adhesive.

4. Coriolis sensor as claimed in one of the previous claims,
wherein each magnet group (15.21, 15.22) has two magnets (15.211, 15.212, 15.221, 15.222) and at least a magnetically conductive closing mechanism (15.7), particularly ferromagnetic,
wherein the magnetic fields of the two magnets have an opposite orientation, and wherein the closing mechanism is designed to conduct and merge field lines of the magnetic fields of the two magnets,
wherein the magnets are in mechanical contact with the closing mechanism, wherein magnetic fields of opposite magnets of different magnet groups are oriented in the same direction,
and wherein the closing mechanism is arranged on a side of the magnet group that faces away from the other magnet group.

5. Coriolis sensor as claimed in Claim 4,
wherein the at least one coil (14.1) has a central area (14.11) and a winding area (14.12) surrounding the central area,
wherein, in a state of rest of the at least one measuring tube, a limit between the magnets of a magnet group, projected onto the cross-sectional plane, is located at least in sections in the central area,
and wherein the magnets of a magnet group are arranged one after the other in the direction of vibration.

6. Coriolis sensor as claimed in one of the previous claims,
wherein the holder is made from a non-magnetic material, for example a stainless steel or aluminum or a plastic and wherein said material particularly has a mass density less than 8g/cm³.

7. Coriolis sensor as claimed in one of the previous claims,
wherein the holder can be fixed to a measuring tube or a fixation point.

8. Coriolis sensor as claimed in one of the previous claims,
wherein the outer notches are each delimited by an outer wall (15.52),
wherein the magnet groups are each fixed to a corresponding outer wall.

9. Coriolis sensor as claimed in one of the previous claims,
wherein the coil of an exciter is designed to apply a force on the associated magnet unit, and wherein the magnet unit of a sensing element is designed to induce an electrical voltage into the coil of the associated coil unit.

10. Coriolis sensor as claimed in one of the previous claims,
wherein the sensor has two collectors (17), wherein a first collector (17.1) located on an upstream side of the sensor is designed to receive a medium flowing into the sensor from a pipe and to conduct it to the inlet of the at least one measuring tube,
wherein a second collector (17.2) is designed to receive the medium leaving the outlet of the at least one measuring tube and to conduct it into the pipe.

11. Coriolis sensor as claimed in one of the previous claims,
wherein the sensor has two process connections (18), particularly flanges (18.1),
wherein the process connections are designed to connect the sensor to a pipe.

12. Coriolis sensor as claimed in one of the previous claims,
wherein the magnet unit is mechanically connected to the corresponding measuring tube and
wherein the coil unit is fixed in a translational and rotatory manner in relation to the inlet and the outlet.

13. Coriolis sensor as claimed in one of the previous claims,
wherein the sensor has a measuring tube,
wherein the holder / the coil unit of the sensing element or the exciter is fixed, respectively, on the measuring tube,
and wherein the coil unit / the holder of the sensing element or the exciter is fixed, respectively, on the support body,
or wherein the sensor has a pair of measuring tubes, wherein the holder / the coil unit of the sensing element or exciter is fixed, respectively, on a first measuring tube, and the coil unit / the holder is fixed, respectively, on a second measuring tube.

14. Coriolis sensor as claimed in Claim 13,
wherein the sensor has two pairs of measuring tubes.

15. Coriolis measuring device (1), comprising:
a Coriolis sensor (10) as claimed in one of the previous claims;
an electronic measuring/operating circuit (77), wherein the electronic measuring/operating circuit is designed to operate the exciter and the sensing elements,
wherein the electronic measuring/operating circuit is further designed to determine and provide flow measured values and/or density measured values,
wherein the measuring device particularly has an electronics housing (80) designed to house the electronic measuring/operating circuit.

## Revendications

1. Débitmètre Coriolis (10) d'un appareil de mesure à effet Coriolis (1) destiné à la mesure d'un débit massique ou d'une densité d'un produit s'écoulant à travers au moins un tube de mesure, lequel débitmètre comprend :
l'au moins un tube de mesure (11) avec une entrée (11.1) et une sortie (11.2), lequel tube est conçu pour guider le produit entre l'entrée et la sortie ;
un corps de support (20), lequel est conçu pour maintenir l'au moins un tube de mesure,
au moins un excitateur (12), lequel est conçu pour faire vibrer l'au moins un tube de mesure ;
au moins deux capteurs (13), lesquels sont conçus pour mesurer respectivement les vibrations d'au moins un tube de mesure ;
au moins un excitateur et/ou au moins un capteur présentant respectivement un dispositif de bobines (14) avec respectivement au moins une bobine (14.1), ainsi que respectivement un dispositif à magnétique (15), le dispositif magnétique et le dispositif de bobines étant mobiles l'un par rapport à l'autre,
le dispositif magnétique présentant un support (15.1) et au moins un premier groupe d'aimants (15.21) avec au moins un aimant (15.211, 15.212) et au moins un deuxième groupe d'aimants (15.22) avec au moins un aimant (15.221, 15.222),
le support présentant un corps (15.3) avec un axe longitudinal de corps et une première extrémité (15.31) et avec une deuxième extrémité (15.32), la première extrémité présentant une surface frontale (15.311),
**caractérisé en ce que**
le corps présente trois entailles (15.4) qui s'étendent dans des plans parallèles entre eux et perpendiculairement à la surface frontale, une entaille centrale (15.41) étant séparée d'une entaille extérieure (15.42) par une paroi intermédiaire (15.51),
chaque paroi intermédiaire présentant une ouverture (15.6), les ouvertures étant opposées par rapport à l'entaille centrale,
le dispositif de bobines étant disposé au moins par sections dans l'entaille, et le premier groupe d'aimants étant disposé dans une première ouverture, et le deuxième groupe d'aimants étant disposé dans une deuxième ouverture.

2. Débitmètre Coriolis selon la revendication 1,
pour lequel les ouvertures partent de la face frontale (15.311).

3. Débitmètre Coriolis selon la revendication 1 ou 2,
pour lequel les groupes d'aimants sont maintenus chacun dans l'ouverture respective au moyen d'une colle, la colle étant notamment une colle céramique.

4. Débitmètre Coriolis selon l'une des revendications précédentes,
pour lequel chaque groupe d'aimants (15.21, 15.22) comporte deux aimants (15.211, 15.212, 15.221, 15.222) et au moins un dispositif de fermeture (15.7) magnétiquement conducteur, notamment ferromagnétique,
les champs magnétiques des deux aimants étant orientés de manière opposée, et le dispositif de fermeture étant conçu pour guider et réunir les lignes de champ des champs magnétiques des deux aimants,
les aimants étant en contact mécanique avec le dispositif de fermeture,
les champs magnétiques d'aimants opposés de différents groupes d'aimants étant orientés dans le même sens,
et le dispositif de fermeture étant disposé sur un côté du groupe d'aimants qui est opposé à l'autre groupe d'aimants.

5. Débitmètre Coriolis selon la revendication 4,
pour lequel l'au moins une bobine (14.1) présente une zone centrale (14.11) et une zone d'enroulement (14.12) entourant la zone centrale,
pour lequel, dans un état de repos de l'au moins un tube de mesure, une limite entre les aimants d'un groupe d'aimants, projetée sur le plan de la section transversale, se trouve au moins par sections dans la zone centrale,
et pour lequel les aimants d'un groupe d'aimants sont disposés les uns derrière les autres dans la direction de vibration.

6. Débitmètre Coriolis selon l'une des revendications précédentes,
pour lequel le support est réalisé en un matériau non magnétique, par exemple en acier inoxydable ou en aluminium ou en matière plastique, et lequel matériau présente notamment une densité de masse inférieure à 8g/cm³.

7. Débitmètre Coriolis selon l'une des revendications précédentes,
pour lequel le support peut être fixé à un tube de mesure ou à une fixation.

8. Débitmètre Coriolis selon l'une des revendications précédentes,
pour lequel les entailles extérieures sont délimitées chacune par une paroi extérieure (15.52),
pour lequel les groupes d'aimants sont chacun fixés à une paroi extérieure correspondante.

9. Débitmètre Coriolis selon l'une des revendications précédentes,
pour lequel la bobine d'un excitateur est conçue pour appliquer une force au dispositif magnétique associé, et
pour lequel le dispositif magnétique d'un capteur est conçu pour induire une tension électrique dans la bobine du dispositif de bobines associé.

10. Débitmètre Coriolis selon l'une des revendications précédentes,
le débitmètre comprenant deux collecteurs (17), un premier collecteur (17.1) situé sur un côté amont du débitmètre étant conçu pour recevoir un produit s'écoulant dans le débitmètre à partir d'une conduite et pour le guider vers l'entrée de l'au moins un tube de mesure,
un deuxième collecteur (17.2) étant conçu pour recevoir le produit sortant de la sortie de l'au moins un tube de mesure et le guider dans la conduite.

11. Débitmètre Coriolis selon l'une des revendications précédentes,
le débitmètre comportant deux raccords process (18), notamment des brides (18.1), lesquels raccords sont adaptés pour relier le débitmètre à une conduite.

12. Débitmètre Coriolis selon l'une des revendications précédentes,
pour lequel le dispositif magnétique est relié mécaniquement au tube de mesure correspondant et
pour lequel le dispositif de bobines est fixé en translation et en rotation par rapport à l'entrée et à la sortie.

13. Débitmètre Coriolis selon l'une des revendications précédentes,
le débitmètre comportant un tube de mesure,
le support / le dispositif de bobines du capteur ou de l'excitateur étant respectivement fixé au tube de mesure,
et le dispositif de bobines / le support du capteur ou de l'excitateur étant respectivement fixé au corps de support,
ou le débitmètre comportant une paire de tubes de mesure, le support / le dispositif de bobines du capteur ou de l'excitateur étant respectivement fixé à un premier tube de mesure, et le dispositif de bobines / le support étant respectivement fixé à un deuxième tube de mesure.

14. Débitmètre Coriolis selon la revendication 13,
le débitmètre comportant deux paires de tubes de mesure.

15. Appareil de mesure à effet Coriolis (1) comprenant :
un débitmètre Coriolis (10) selon l'une des revendications précédentes ;
un circuit électronique de mesure/d'exploitation (77), le circuit électronique de mesure/d'exploitation étant conçu pour faire fonctionner l'excitateur ainsi que les capteurs,
le circuit électronique de mesure/d'exploitation étant en outre conçu pour déterminer et mettre à disposition des valeurs mesurées de débit et/ou des valeurs mesurées de densité,
l'appareil de mesure comprenant notamment un boîtier électronique (80) destiné à loger le circuit électronique de mesure et d'exploitation.
